# EUROPEAN PATENT APPLICATION

(11) **EP 1 561 688 A1**
(43) Date of publication of application: **10.08.2005**
(21) Application number: 04466015.7
(22) Date of filing: 23.06.2004
(51) Int. Cl.: B65B 51/30, B65B 9/20

(54) **Machine for forming tetrahedral bags**

(30) Priority: 06.02.2004 CZ 200415043 U; 19.02.2004 CZ 200415094 U
(71) Applicant: Masek, Jan, 258 01 Vlasim (CZ)
(72) Inventor: Masek, Lucas, 258 01 Vlasim (CZ)
(74) Representative: Misek, Vaclav

(57) **Abstract**

A machine for forming bags in so-called delta or quadrilateral arrangement. It comprises one pair of opposite situated welding jaws (5) arranged in a frame, which is movable between an upper position A and a lower position B along a distance equal to the length X of a bag. The jaws (5) are on their mutually facing sides provided by individual rectangular extensions linked to each other. The lateral surfaces of which constitute first and second welding surfaces of the jaws (5). The jaws (5) are coupled with arms (6) of a lever assembly mounted on a pivot (7) of a supporting frame for turning the jaws (5) between their extreme closed positions F and G. In the position F the corresponding first welding surfaces of both jaws (5) are situated in planes perpendicular to the planes of the corresponding second welding surfaces of both jaws (5) in the position G. Between the extensions of jaws (5) tubes (1) of packing material are disposed for passing therebetween.

## Description

### Field of the invention

The invention relates to the field of packing machines. Preferably, the machine according to the invention is designed for packing machines where a closed sack-like bag with lateral walls in the arrangement generally known as delta or quadrilateral arrangement is formed by means of welding jaws.

### Description of prior art

Generally known is a conventional bag forming machine operating in a step by step mode in one row by means of two pairs of opposite situated welding jaws, which are turned with respect to each other at an angle of 90 degrees. Although this principle is simple said machine is rather suitable for bags of greater size where short welding jaws need not to be used. A machine of this type cannot reach higher outputs since, in compliance with the welding principle, the stroke of the welding jaws must be longer than one half of the length of the welding jaws.

To obtain higher outputs machines for forming bags with movable jaws have been developed. In principle, there are two bags forming systems known at this time.

For example US Pat. 5,220,771 discloses a machine for forming quadrilateral triangle packs for packing liquids where the packs are prepared by forming packing material continuously entering a tubular mold and by welding said material at two places. The machine includes two opposite situated systems of power driven endless chains carrying heating jaws disposed along said chains at fixed intervals from each other, which intervals are equal to the double length of the packing. Both chain systems are turned with respect to each other at the right angle in axial direction. The heating jaws of the first chain system have a shape of transversal jaws located below the level of product at the filling place to complete the first packaging weld and in their clasped position the heating jaws are simultaneously carrying the tube of material and drawing it downwardly through the machine. The jaws of the second chain system are located between the first jaws with certain axial displacement to make the second packaging weld, also below the product level, which weld is made at a separate distance equal to the length of the packing and in transversal position with respect the first weld. The machine is adjustable with respect to to the packing height.

In EP 800,993 another machine for producing packs of said type is disclosed, where the packs are produced by forming packing material continuously entering a tubular mold through which individual doses of packaged material are simultaneously brought in. The machine further includes two transversally rotating rollers having welding surfaces for making welds at both ends of packs. In this way individually sealed and hermetically closed packs are formed and subsequently separated. The closing and separating operations are performed by mutually transversally situated pairs of arms of rotating rollers, which engage sequentially each after to make welds in both transversal directions on a step by step process basis. In this way triangle packs of so-called "delta" or quadrilateral arrangement are made.

Machines provided with the above described jaws operate in continuous manner but the principle of the machine is mechanically complicated and due to this complicacy such machines cannot be used for production of small-sized bags.

### Summary of the invention

The object of this invention is to overcome the disadvantage of a low output single-row machines operating in the step by step mode and the disadvantage of rather complicated machine design of continuously operated machines and thus to create such principles of the formation and production of bags that could be applied to the conventional multiple-row machines of STICK-PAK type, i.e. machines producing bags in an arrangement generally known as "delta or quadrilateral arrangement".

According to one of the embodiments of the invention the machine for forming welded bags comprises a pair of opposite situated welding jaws arranged in a frame, which is movable between an upper position A and a lower position B along a distance equal to the length X of the bag where the jaws are at their mutually facing sides provided by individual rectangular extensions linked to each other, the lateral surfaces of which constitute first and second welding surfaces of jaws, whereby the jaws are coupled with arms of a lever assembly mounted on a pivot of a supporting frame for turning the jaws between their extreme closed positions F and G, in which the corresponding first welding surfaces of both jaws are situated in planes perpendicular to the planes of the corresponding second welding surfaces of both jaws and whereby between the extensions of jaws tubes of packing material are disposed for passing therebetween.

Advantageously, the length of the stroke of the supporting frame is adjustable.

According to another embodiment of the invention the machine comprises two pairs of parallel situated welding jaws disposed above each other at a distance X equal to the length of a bag, which jaws are arranged in a frame movable between an upper position A and a lower position B along a distance equal to 2X whereby one pair of welding jaws has longitudinal welding surfaces and the welding jaws of the second pair have individual welding surfaces situated always in one direction transversally to the longitudinal welding surfaces of the jaws of the first pair and arranged in intervals from each other so that the transversal welding surfaces of both jaws of the second pair engage alternately each other and always one welding surface of one jaw is situated against one in the opposite direction situated welding surface of the second jaw whereby each pair of welding jaws is independently movable between an extreme closed position C and an extreme open position D and in the space occupied by the welding jaws between the jaws of the first pair and the facing welding surfaces of the jaws of the second pair tubes of packing material are disposed for passing therebetween.

According to still another embodiment the machine may comprise one pair of welding jaws adjustable in vertical direction in respect of the second pair of welding jaws.

According to further embodiment of the invention the machine comprises upper and lower welding jaws situated one above other at a distance X equal to the length of the bag where the lower welding jaws consist of a pair of welding jaws having longitudinal welding surfaces and the upper welding jaws consist of welding jaws comprising a first upper welding jaw consisting of a pair of inner parallel guiding rods connected by a crossbar for moving the rods between the open position I and the closed position H and the second welding jaw consisting of a pair of parallel outer guiding rods connected by a crossbar for moving the rods between the open position I and the closed position H, and where each of the jaws includes individual welding surfaces situated in the same direction transversally with respect to the longitudinal welding surfaces of the lower welding jaws where said individual transversal welding surfaces are disposed at intervals from each other so that the transversal welding surfaces of both jaws engage alternately each other and always one welding surface of one, the first welding jaw is situated against one in the opposite direction situated welding surface of the second welding jaw and in the space between the mutually facing transversal welding surfaces of the first and second upper welding jaw and the mutually facing longitudinal welding surfaces of the lower welding jaws tubes of packing material are disposed for passing therebetween.

Advantageously, the upper and lower welding jaws are adjustable with respect to each other in vertical direction.

### Brief description of the drawings

- Fig. 1 -: shows a set of two pairs of welding jaws to form a bag according to the invention:
- Fig. 2 -: shows a set of one pair of welding jaws to form bags according to the invention;
- Fig. 3 -: shows a set of welding jaws to form bags according to still another embodiment of the invention.

### Detailed description of embodiments of the invention

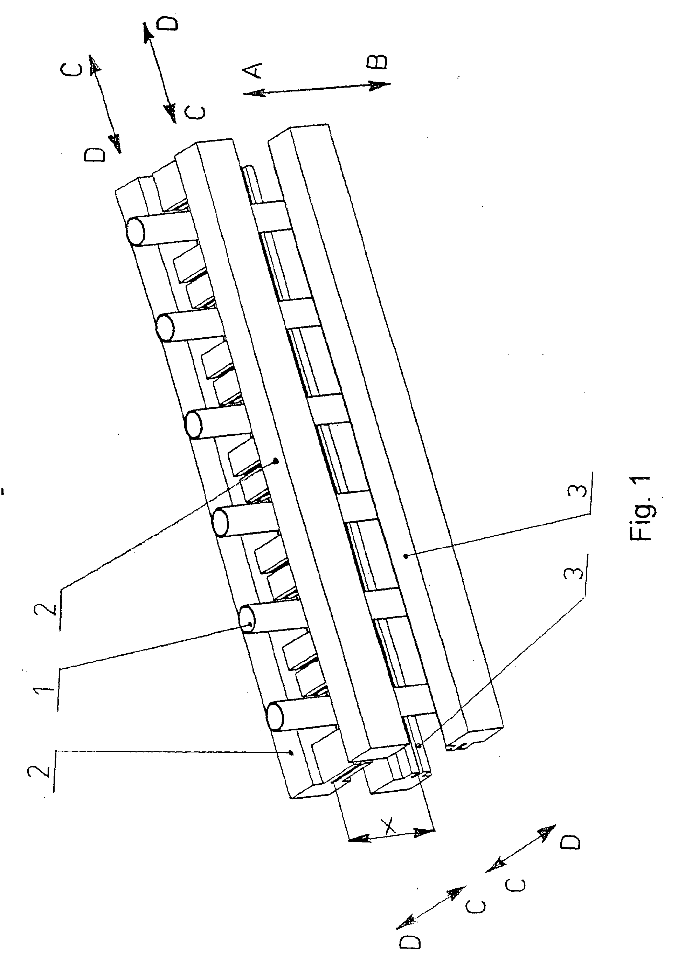

Fig. 1 shows a machine consisting of two pairs of welding jaws according to the invention. The machine includes two pairs of welding jaws 2,3 situated parallel to each other and located above each other at a distance X equal to the length of a bag. Both pairs of welding jaws 2,3 are disposed in a supporting frame (not shown), which is movable between an upper position A and a lower position B at a distance equal to 2X, what represents the length of one operation step of the set of welding jaws 2,3 from the starting upper position A to the lower position B. One pair of welding jaws 2 is adjustable in vertical direction with respect to the second pair of welding jaws 3 in relation to the length X of the bag produced. The closing an opening motion of each pair of welding jaws 2,3 is independently mechanically operated and thus each pair is independently movable between the closed extreme position C and the open extreme position D.

The lower pair of welding jaws 3 consists of two longitudinal welding jaws 3 having longitudinal welding surfaces, which jaws are transversally movable in respect of each other between the closed position C and the open position D. The upper pair of the welding jaws 2 includes two jaws 2, which are movable with respect to each other in the longitudinal direction between the closed position C and the opened position D. Each of the jaws 2 comprises individual welding surfaces oriented in the same direction and disposed transversally to the longitudinal welding surfaces of the lower jaws 3 and spaced from each other so that the transversal welding surfaces of both jaws 2 engage alternately each other so that always one welding surface of one jaw 2 is facing one in the opposite direction situated welding surface of the second jaw 2.

In the space occupied by the pair of welding jaws 2,3 between the facing transversal welding surfaces of the welding jaws 2 and the longitudinal welding surfaces of the welding jaws 3 tubes 1 of the packing material are disposed for motion therebetween. The number of the tubes 1 is optional so that a multiple-row bag producing machine may be created.

The machines works in one operation cycle in which two bags are produced.

Both pairs of welding jaws 2 and 3 are positioned at a distance X which is equal to the length of the bag produced. The welding jaws 2 and 3 are disposed on a supporting frame, which during one operation cycle moves from the upper position A to the lower position B and back to the upper position A. The stroke of the supporting frame with jaws between the upper position A and the lower position B constitutes an operation step of the set of jaws 2, 3 and is equal to 2X.

The operation cycle starts in the upper position A when all welding jaws 2,3 take open positions D. Upon the start of the machine the welding jaws 3 are moved into their closed position C where they catch the tube packing material. After the jaws 3 are clamped the supporting frame moves from its upper position A towards the lower position B and simultaneously moves the jaws while the tubes 1 of packing material are drawn by the clamped jaws 3 and the material is dosed into the first bag. After finishing the dosing of the first bag the jaws 2 move from their open position D to the closed position C and thereafter the second bag, which is formed above the clamped jaws 2 may be dosed. Upon reaching the lower position B the jaws 2, 3 are moved to their open positions D. In this open position D the welding jaws 2,3 returns back to the upper position A. The operation cycle is now finished and two triangle bags closed transversally at both their ends known also as "delta" or quadrilateral configuration bags have been produced.

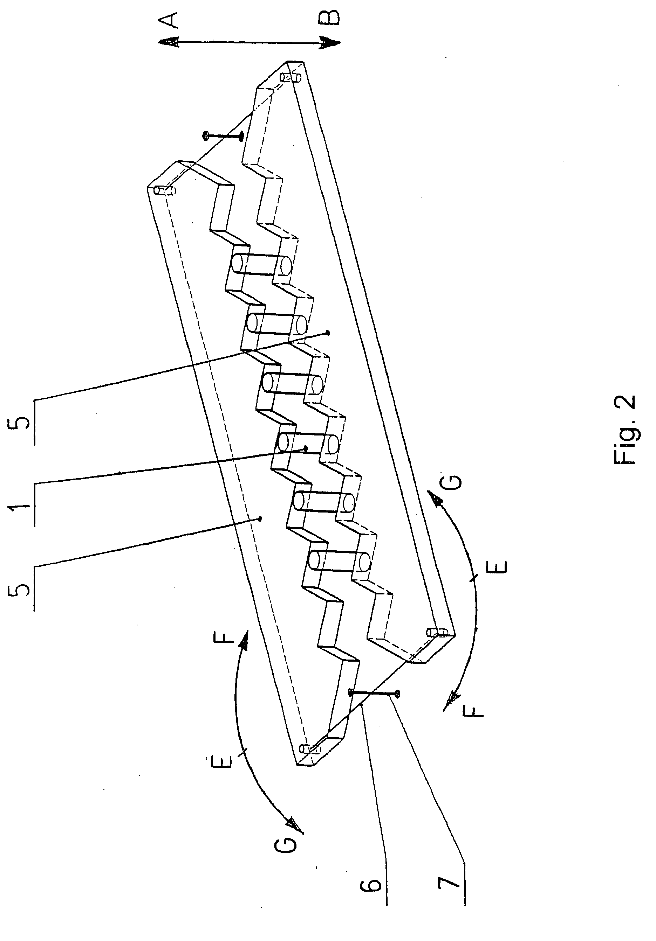

Fig. 2 shows a machine consisting of one pair of welding machine according to the invention.

The machine includes a pair of opposite situated welding jaws 5 that are disposed in a supporting frame (not shown), which frame is movable between an upper position A and a lower position B at a distance equal to the length X of a bag. The length X of the bag is changed along with the length of the stroke of the support frame. Each jaw 5 is provided on the inner side by mutually connected rectangular extensions the individual lateral sides thereof form first and second welding jaws for forming lower and upper ends of the welded bags.

The jaws 5 are mechanically coupled by a lever assembly providing the necessary welding force and designed for displacing the jaws against each other from the starting position 3 with the opened welding jaws 5 to the both extreme positions F and G with the clamped welding jaws 5. In both extreme positions F and G the respective corresponding first and second welding surfaces of the rectangular extensions of both jaws 5 take their closed position.

The jaws 5 are on their transversal ends connected by arms 6 of a lever assembly mounted on a pivot 7 of the supporting frame to provide turning of the jaws 5 between their extreme closed positions F and G. In these positions the corresponding first welding surfaces clasped are situated in planes perpendicular to the planes of the corresponding clasped second welding surfaces of the jaws 5.

Between the extensions of the jaws 5 the tubes 1 of the packing material are disposed for passing. They are optional in number order to form a multi-row machine for production of bags.

The machine operates in two-stroke operation cycle in which two bags are produced.

The welding jaws are mounted on a supporting frame which moves from the upper position A to the lower position B and back to the upper position A. The length of the stroke of the supporting frame is adjusted according to the size X of the bag. The welding jaws 5 are turned through a simple lever assembly between both extreme closed positions F and G to provide proper clasping thereof in the closed positions F and G.

The first operation period of the cycle starts in the upper position A. The welding jaws 5 are turned by means of the lever assembly from the starting open position F to the closed position F. After the jaws 5 i.e. their corresponding first welding surfaces are closed, the motion of the support frame from the upper position A to the lower position B causes their displacement. During this displacement the tubes of packing material are drawn by the clasped jaws 5 and at the same time the material is dosed into the first bag. After reaching the upper position B the welding jaws 5 are moved to their starting open position E. In this open position E the welding jaws 5 return to their upper position A. Thus one period of the operation cycle is finished. Now the second operation period is starting in which the welding jaws 5 are turned from the open starting position E to the closed position G. In this closed position G the tubes of the packing material are clasped by the corresponding second welding surfaces of the jaws 5 in the position turned by 90° with respect to the position of the clasped first welding surfaces of the jaws 5 in the position F. After closing the jaws 5 in the position G the jaws are displaced to their lower position B. The tubes 1 of the packing material are simultaneously drawn by the closed welding jaws 5 and material is dosed into the second bag, which is formed above the clasped welding jaws 5 in the second turned position. After reaching the lower position B the welding jaws 5 are open to take the position E. In this open position E the welding jaws 5 return back to the upper position A. In this way, in two periods, two triangle bags known also as the bags of "delta" or quadrilateral configuration are produced.

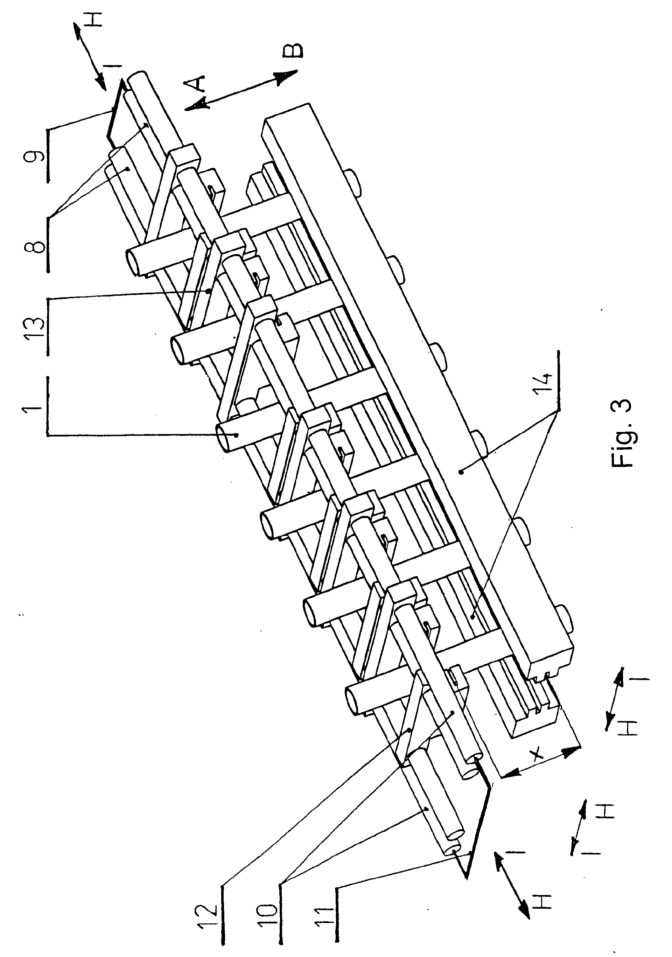

Fig. 3 shows another possible embodiment of the machine including two pairs of welding jaws according to the invention.

The machine consists of a system of upper and lower welding jaws 12,13,14, situated above each other at the distance X equal to the length of a bag. The welding jaws 12,13,14, are disposed in supporting frames (not shown) which are movable between an upper position A and a lower position B to the extend corresponding to the operation step of the system of welding jaws 12,13,14, and equal to 2X. Also, the supporting frame of the upper welding jaws 12, 13 is established with respect to the lower welding jaws 14 so that the distance between the horizontal axes of the upper welding jaws 12, 14 is equal to the length of the bag X. The upper and the lower welding jaws 12,13,14, are mutually adjustable in vertical direction with respect to the length X of the bag produced. The upper and the lower welding jaws 12,13,14, are provided also by an individual mechanical control of their clamping and opening motion and therefore are movable between the closed position H and the open position I.

The lower welding jaws include two basic welding jaws 14 with longitudinal welding surfaces, which jaws are transversally movable in respect of each other between the closed position H and the open position I.

Also the upper welding jaws include two welding jaws. The first welding jaw 12 consists of a pair of internal parallel guiding bars 8, which are connected by a cross bar 9, for displacement of the rod 8 between the open position 1 and the closed position H. The second welding jaw 13 includes a pair of external parallel guiding rods 10 connected by a crossbar 11 for the displacement of rods 10 between the open position 1 and the closed position H. Each of the jaws 12, 13 further comprises individual welding surfaces oriented in the same direction transversally with respect to the longitudinal welding surfaces of the lower welding jaws 14. Such individual welding surfaces are spaced from each other so that the transversal welding surfaces of both jaws 12,13 engage alternately each other and so that always one welding surface of one, the first welding jaw 12 is located against one in the opposite direction oriented welding surface of the second welding jaw 13.

In the space between the mutually facing transversal surfaces of the first and second welding jaws 12 and 13 and the mutually facing longitudinal welding surfaces of the lower welding jaws 14 the tubes 1 of packing material are situated wherein the number of the tubes 1 corresponds to the number of the welding surfaces of the upper welding jaws 12,13. The number of the tubes 1 is optional provided the same number of welding surfaces of the upper welding jaws 12,13 is available.

The machine is operated as follows:
The upper and the lower welding jaws 12,13,14 are adjusted at a distance X, which is equal to the length of the produced bag. The welding jaws 12,13,14 are moving during the operation cycle by means of their supporting frames from the upper position A to their lower position B and back to the upper position A. The space of the operation step of the system of welding jaws 12,13,14 between the starting upper position A and lower position B is equal to 2X.
The operation cycle starts in the position A where all the welding jaws 12,13,14 are in their open positions I. Upon starting the packing machine the lower welding jaws 14 move towards their clasping position H. After clasping the whole system of welding jaws 12,13,14 is moving towards the lower position B while the tubes of packing material are drawn and the material is dosed in the first bag. After completion of the dosing of the first bag the welding jaws 12,13,14 are moved by means of the inner guiding rods 8 and the outer guiding rods 10 from their open position I to their closed positions H and all welding jaws 12,13,14 are in the clasping mode. Whereupon, the material is dosed into the second bag, which is formed above the clasping welding surfaces of the welding jaws 12,13,14. Once the system of welding jaws 12,13,14 has reached the lower position B the lower welding jaws 14 are opened to occupy the open position 9 and the upper welding jaws 12,13, are opened to occupy their open position I. Thereafter, the whole system is returning to its starting position A. The operation cycle, in which two bags are produced is thus finished.

### Industrial applicability

The machine according to the present invention is applicable in the field of packing machines where a sack-like bag with lateral walls arranged in the shape generally known as "delta" or quadrilateral arrangement are produced by means of transversal welding jaws.

## Claims

1. A machine for forming bags in so-called delta or quadrilateral arrangement **characterized in that** it comprises one pair of opposite situated welding jaws (5) arranged in a frame, which is movable between an upper position A and a lower position B along a distance equal to the length X of a bag where the jaws (5) are on their mutually facing sides provided by individual rectangular extensions linked to each other, the lateral surfaces of which constitute first and second welding surfaces of the jaws (5), whereby the jaws (5) are coupled with arms (6) of a lever assembly mounted on a pivot (7) of a supporting frame for turning the jaws (5) between their extreme closed positions F and G, whereby in the position F the corresponding first welding surfaces of both jaws (5) are situated in planes perpendicular to the planes of the corresponding second welding surfaces of both jaws (5) in the position G whereby between the extensions of jaws (5) tubes (1) of packing material are disposed for passing therebetween.

2. A machine of claim 1 **characterized in that** the length of the stroke of the supporting frame is adjustable.

3. A machine for forming bags in so-called delta or quadrilateral arrangement **characterized in that** it comprises two pairs of parallel situated welding jaws (2,3,) disposed above each other at a distance X equal to the length of a bag, which jaws (2,3) are arranged in a frame, which is movable between an upper position A and a lower position B along a distance equal to 2X where the first pair of welding jaws (3) has longitudinal welding surfaces and the welding jaws (2) of the second pair have individual welding surfaces situated always in one direction transversally to the longitudinal welding surfaces of the jaws (3) and arranged in intervals from each other so that the transversal welding surfaces of both jaws (2) engage alternately each other and always one welding surface of one jaw (2) is situated against one welding surface of the second jaw (2) situated in opposite direction whereby each pair of welding jaws (2,3) is independently movable between an extreme closed position C and an extreme open position D and in the space occupied by the welding jaws (2,3) between the jaws (3) and the facing welding surfaces of jaws (2) tubes (1) of packing material are disposed for passing therebetween.

4. A machine of claim 3 **characterized in that** one pair of welding jaws (2) is adjustable in vertical direction in respect of the second pair of welding jaws (3).

5. A machine for forming bags in so-called delta or quadrilateral arrangement **characterized in that** it comprises upper and lower welding jaws (12,13,14) located one above other at a distance X equal to the length of a bag, which jaws are arranged for motion between an upper position A and a lower position B within an interval equal to 2X where the lower welding jaws consist of a pair of welding jaws (14) having longitudinal welding surfaces and the upper welding jaws consist of the welding jaws (12,13), whereby the first upper welding jaw (12) consists of a pair of inner parallel guiding rods (8) mutually connected by a crossbar (9) for moving the rods (8) between an open position I and a closed position H and the second upper welding jaw (13) consists of a pair of outer parallel guiding rods (10) connected together by a crossbar (11) for moving the rods (10) between the open position 1 and the closed position H and each of the jaws (12,13,) comprises individual welding surfaces oriented in the same direction transversally with respect to the longitudinal welding surfaces of the lower welding jaws (14) where said individual transversal welding surfaces are disposed at intervals from each other so that the transversal welding surfaces of both jaws (12, 13) engage alternately each other and always one welding surface of one, the first welding jaw (12) is situated against one in the opposite direction situated welding surface of the second jaw (13) and in the space between the mutually facing transversal welding surfaces of the first and the second upper welding jaw (12) and (13) and the mutually facing longitudinal welding surfaces of the lower welding jaws (14) tubes (1) of packing material are disposed for passing therebetween.

6. A machine of claim 5 **characterized in that** the upper and lower welding jaws (12,13) and (14) are adjustable with respect to each other in vertical direction.
